# EUROPÄISCHE PATENTSCHRIFT

(11) **EP 1 415 743 B1**
(45) Veröffentlichungstag und Bekanntmachung des Hinweises auf die Patenterteilung: **22.02.2012**
(21) Anmeldenummer: 03023947.9
(22) Anmeldetag: 22.10.2003
(51) Int. Cl.: B26D 7/26

(54) **Einstelleinrichtung für ein Feinbearbeitungswerkzeug**
Adjusting device for a finishing tool
Dispositif de réglage pour un outil de finition

(30) Priorität: 29.10.2002 DE 20216739 U
(43) Veröffentlichungstag der Anmeldung: 06.05.2004
(60) Teilanmeldung: 10182981.0
(73) Patentinhaber: Gühring, Jörg, Dr., 72458 Albstadt (DE)
(72) Erfinder: Broghammer, Hans-Peter, 78628 Rottweil (DE); Ehrler, Rolf, 79331 Teningen (DE)
(74) Vertreter: Winter, Brandl, Fürniss, Hübner, Röss, Kaiser, Polte - Partnerschaft

(56) Entgegenhaltungen:
- EP-A2- 0 058 646
- WO-A-02/060624
- DE-U- 9 411 260
- GB-A- 2 013 539
- JP-A- 3 066 562
- JP-U- 63 060 561
- US-A- 3 379 077
- US-A- 4 224 846
- US-A- 4 443 140
- US-A- 4 775 268

## Beschreibung

Die Erfindung bezieht sich auf eine Einstelleinrichtung gemäß dem Oberbegriff des Anspruchs 1 bzw. des Anspruchs 13 zum Einstellen der Lage zumindest einer Schneide eines Feinbearbeitungswerkzeugs, insbesondere einer Reibahle, bezüglich eines Schneidenträgers, sowie auf ein entsprechendes Feinbearbeitungswerkzeug.

Bei derartigen Feinbearbeitungswerkzeugen besteht eine der Anforderungen an die Genauigkeit darin, dass sich die Schneidkanten auf einer auf die Drehachse des Werkzeugs gut zentrierten Kreisbahn bewegen. Dazu sind verschiedenen Lösungsansätze bekannt:

Zur genau zentrierten Einspannung eines Werkzeugschafts, z.B. eines Bohrer- oder Fräserschaftes sind, beispielsweise aus der DE-GM 94 11 260 oder der DE 27 00 934 A1, hydraulische Dehnspannfutter bekannt, bei denen eine Ringkammer im Futterkörper radial nach innen durch eine Dehnbuchse begrenzt wird, die sich beim Anlegen eines hyrdaulischen Drucks in der Ringkammer radial nach innen elastisch verformt und dabei den in die Aufnahmebohrung eingeschobenen Werkzeugschaft allseitig fest umgreift. Derartige Hydro-Dehnspannfutter sind beispielhaft auch dem Prospekt "Höher, schneller, weiter...", Ausgabe 01/2002, der Firma Hauser HSC-Technologie zu entnehmen.

Zum genau zentrierten Aufspannen von hohlzylindrischen Bauteilen sind andererseits auch Dehnspanndorne bekannt, die ebenfalls mit hydraulischem Druck arbeiten und eine Ringkammer aufweisen, die radial nach außen von einer Dehnspannhülse begrenzt wird. Durch Dehnung der Dehnspannhülse erfolgt dann die zentrische Aufspannung des Werkstücks.

Darüber hinaus ist im deutschen Gebrauchsmuster DE 296 14 727 U1 schon ein Hydro-Dehnspannfutter gezeigt, in das ein Werkzeugschaft eingespannt ist und auf das außenseitig zusätzlich noch ein hohlzylindrisches Werkzeug aufgespannt ist. Dabei kommt eine ringförmige Druckkammer zum Einsatz, die eine radial nach außen elastisch verformbare Außenwand und eine radial nach innen elastisch verformbare Innenwand aufweist. Mittels einer Schraube, die beim Einschrauben in eine Bohrung auf einen Kolben in einem Hydraulikzylinder drückt, der über Verbindungskanäle mit der Ringkammer verbunden ist, wird ein hydraulischer Druck angelegt. Dadurch erfolgt eine Dehnung der Innen- und der Außenwand der Ringkammer, wodurch der Werkzeugschaft sowie der Hohlzylinder über ihren gesamten Umfang fest ein- bzw. aufgespannt werden können.

Allen diesen bisher bekannten Spannmitteln ist es gemein, dass sie eine hochzentrierte Ein- bzw Aufspannung der Werkzeuge bzw. Werkstücke bieten.

Feinbearbeitungswerkzeuge, wie zum Beispiel Reibahlen für große Durchmesser oder Honwerkzeuge, wie sie beispielsweise zum Hohnen von Zylindern verwendet werden, weisen dabei Schneiden auf, die - beispielsweise an einem Spannring befestigt - auf einen Spanndorn gespannt werden. Die Schneiden befinden sich dabei radial außerhalb und ohne größeren axialen Versatz direkt an der Aufspannung. Zwar ist auf diese Weise verhindert, dass sich ein Zentrierungsfehler entlang der überstehenden Bohrerlänge bis hin zur Bohrerspitze aufkumulieren kann. Es stellt sich aber das Problem, dass unter engsten Durchmessertoleranzen gearbeitet werden muss, d.h., dass die Lage der Schneidkante(n) in Radialrichtung genau eingestellt werden muss.

Bei Präzisionsbohrwerkzeugen kann dagegen die axiale Lage der Schneidkanten, beispielsweise bezüglich eines Nullpunkts eines CNC-Koordinatensystems entscheidend sein. Mit den bekannten Auf- bzw. Einspannvorrichtungen können zwar mit hoher Rundlaufgenauigkeit und schwingungsgedämpfte Werkzeugeinspannungen erreicht werden, eine für Feinbearbeitungswerkzeuge wünschenswerte Feineinstellung der Lage der Schneiden ist damit aber nicht zu bewerkstelligen.

Aus WO 02/060624 ist ein Werkzeug gemäß dem Oberbegriff des Anspruchs 1 bzw. des Anspruchs 13 bekannt, dessen Ende mittig oder auch außermittig geschlitzt ist, so dass gewissermaßen zwei Werkzeughälften entstehen, die sich mittels Fluiddruck auseinanderspreizen lassen. Über Steuerung des Fluiddrucks lassen sich somit zwei sich gegenüberliegen Schneiden, die auf den Werkzeughälften sitzen, einstellen.

Weitere Einstelleinrichtungen sind aus US 4,443,140, US 4,775,268, US 4,224,846, JP 03-066562 A und JP 63-60561 U bekannt.

Es ist daher Aufgabe der vorliegenden Erfindung, eine Einstelleinrichtung für ein Feinbearbeitungswerkzeug zu schaffen, mit der die Lage der Schneide(n) bezüglich eines Schneidenträgers möglichst genau einstellbar ist, sowie ein Feinbearbeitungswerkzeug mit einer derartigen Einstelleinrichtung.

Diese Aufgabe wird bezüglich der Einstelleinrichtung durch die Merkmale des Anspruchs 1 oder Anspruchs 13 gelöst, bezüglich des Feinbearbeitungswerkzeugs mit den Merkmalen des Anspruchs 21.

Vorteilhafte Ausgestaltungen sind Gegenstand der Unteransprüche.

Die erfindungsgemäßen Einstelleinrichtung nutzt dabei die aus dem Stand der Technik zur Auf- bzw. Einspannung von Werkzeugen bei Dehnspanndornen bzw. -futter an sich bekannte Dehnspanntechnik, bei der bisher durch eine Materialdehnung am Werkzeugträger ein Werkzeug in ein Futter oder auf einen Spanndorn gespannt wird. Mit der erfindungsgemäßen Einstelleinrichtung gelingt es aber erstmals, die Lage der Werkzeugschneide bezüglich eines Schneidenträgers feineinzustellen.

Durch einen Versatz der Schneide zur Druckkammer in Einstellrichtung wird erreicht, dass eine von einer Druckbeaufschlagung des Druckübertragungsmittels in der Druckkammer hervorgerufene Dehnung der Außenwand der Druckkammer, bzw. des Schneidenträgers unmittelbar zu einer Lageverschiebung der Schneide führt. Durch geeignete Bedienung der Druckerzeugungseinrichtung kann dann die Lage der Schneide auf gewünschte Weise eingestellt werden.

Wie Versuche mit dem erfindungsgemäßen Feinbearbeitungswerkzeug gezeigt haben, ist es möglich, Toleranzen im Bereich von 1/1000 mm einzuhalten, während Verstellungen von ca. 1/10 mm grenzwertig sind. Dabei wurde mit Drücken bis zu 1000 bar gearbeitet. Ein starker Druckanstieg in der Druckkammer entspricht dabei nur einer sehr kleinen Dehnung der Druckkammer-Außenwand (des Dehn-Außenwandabschnitts des Trägerkörpers). Die erfindungsgemäße Einstelleinrichtung wirkt dementsprechend wie ein Hebel, so daß sich die Dehnung sehr genau dosieren läßt.

Dabei ist der Schneidenträger ein Werkzeuggrundkörper, der beipielsweise mit einer für HSK- oder SK-Systeme passenden Kupplung ausgestattet ist, so dass das Feinbearbeitungswerkzeug auf gängigen Werkzeugmaschinen, insbesondere CNC-Maschinen, eingesetzt werden kann. Beispielsweise können hier wie auch in Kombination mit den anderen Ausführungsformen eine Verschraubung von Wende- oder Wechselschneidplatten am Werkzeughalterungs-Grundkörper vorgesehen sein. Als besonders geeignet für Feinbearbeitungswerkzeuge wie Reibahlen hat sich dabei eine Ausgestaltung mit drei Schneiden herausgestellt. Alternativ dazu wären aber allgemein auch angelötete Schneiden oder fest am Grundkörper vorhandene Schneiden denkbar.

In der vorteilhaften Ausführungsform sind die Druckkammer und die einzustellende Schneide dabei in Einstellrichtung auf einer Linie angeordet, d.h. die Druckkammer liegt genau unterhalb der Schneide(n). Die durch die Einstelleinrichtung induzierte Wanddehnung wirkt dann direkt auf die Schneide. Es wären aber auch andere Geometrien denkbar, insbesondere bei vorgegebenen geometrischen Außenabmaßen des Feinbearbeitungswerkzeugs, die keine andere Bauform zulassen.

Bei Werkzeugen, bei denen es auf eine größtmögliche Parallelität der Schneidkanten zur Drehachse über die gesamte Kantenlänge ankommt, beispielsweise bei Honleisten bzw. -steinen von Honwerkzeugen, ist es dabei vorteilhaft, wenn sich die Druckkammer unter der Schneide über die gesamte (bei Honwerkzeugen axiale) Länge der Schneidkante erstreckt. Auf diese Weise wird eine Parallelverschiebung der gesamten Schneide gewährleistet.

Bei anderen Werkzeugen, wie beispielsweise Reibahlen, kommt es dagegen hauptsächlich auf den schneideneckennahen Bereich der Schneidkanten an. In diesem Fall ist es vorteilhaft, die Druckkammer nur unter dem Bereich der Schneidenecke anzuordnen, um so die gesamte Kraftübertragung auf den spitzennahen Bereich zu lenken und so eine effektive Druckausnutzung zu haben. Auch kann es sogar gewünscht sein, eine Schneide unter einem Winkel einzustellen, beispielsweise bei einer Freiwinkeleinstellung.

Als Druckübertragungsmedium in der Druckkammer der Dehnspanneinrichtung wird bevorzugt eine (zumindest näherungsweise) inkompressible Flüssigkeit, besonders bevorzugt Hydrauliköl, eingesetzt, da auf diese Weise im elastischen Bereich der Dehnung auch eine zumindest näherungsweise lineare Übertragungsfunktion der mit der Druckerzeugungsvorrichtung aufgebrachten Kraft und der Wanddehnung, bzw. der Schneidenverstellung erzielt werden kann. Bei flüssiggeschmierten Werkzeugen bietet sich dagegen unter Umständen auch eine Befüllung mit dem Schmiermittel an.

Durch Verwendung einer Kunststoff- bzw. Elastomerhülse, bzw. -einsatzes kann hingegen eine Veränderung des Übertragungsverhaltens bei Erwärmung, Lufteinschlüssen oder bei Leckagen verhindert werden, so dass die gewünschte Schneidenverstellung zuverlässig erreicht wird. Daneben wäre auch ein Gel denkbar.

Vorteilhaft ist zur Druckerzeugung eine Schraube vorgesehen, die in eine Gewindebohrung eindrehbar ist, die mit der Druckkammer in Verbindung steht. Die Feineinstellung kann dann über eine Änderung des Volumens, das das Druckübertragungsmedium einnimmt, vorgenommen werden, indem man die Schraube auf die gewünschte Eindrehtiefe einschraubt.

Im Sinne einer guten Zugänglichkeit und um auch kleine Außendurchmesser des Werkzeugs am schneidkantenbewehrten Abschnitt zu ermöglichen ist die Druckbeaufschlagungseinrichtung von der Dehnspanneinrichtung dabei vorteilhaft über einen axialen Abstand getrennt. Vorteilhaft im Sinne geringer Leckageverluste drückt die in der Sacklochbohrung geführte Schraube dabei auf einen in einem Hydraulikzylinder geführten Hydraulikkolben.

Alternativ dazu kann auch über eine entsprechende Pumpe der Druck auf den Hydraulikzylinder aufgebracht werden.

Vorteilhaft ist es ferner, wenn schon eine Zuordnung von bestimmten Werten der Eingangsgröße der Druckerzeugungseinrichtung, im Falle der Schraube also beispielsweise des Schraubendrehwinkels, zu entsprechenden Lageverstellwerten der Schneide vorliegt, d.h. wenn beispielsweise bekannt ist, wie bei einer bestimmten Temperatur, Wandstärke des Dehn-Außenwandabschnitts etc., die entsprechende Dehnung ausfällt. Mit einer solchen Eichung gelingt es, den Durchmesser über die Kraft der Druckbeaufschlagungseinrichtung feineinzustellen, ohne dass dabei ein Nachmessen an der Schneide erforderlich wäre.

Die erfindungsgemäße Einstellungseinrichtung ist besonders für eine radiale Einstellung der Schneide(n) geeignet. Dabei ist es vorteilhaft, wenn die Druckkammer ringförmig ausgebildet ist, insbesondere bei mehrschneidigen Werkzeugen. Die über den Gesamtumfang gleichförmige Druckverteilung und damit gleichförmige Dehnung führt dann vorteilhaft zu einer erwünschten Zentrierung der Schneiden auf die Längsachse des Werkzeugs und damit zu einer hohen Rundlaufgenauigkeit der Schneiden. Im Sinne einer möglichst direkten Kraftübertragung ist aber - insbesondere bei einem Einschneider - auch eine Ausgestaltung der Druckkammer denkbar, bei der die Druckkammer auf den lokalen Umfangsabschnitt der Schneide begrenzt ist.

Um standardisierte Werkzeughalterungs-Grundkörper nutzen zu können, wird die zumindest eine Schneide nach Anspruch 13 nicht direkt am Werkzeugträger-Grundkörper angebracht, sondern über einen Trägerring aufgespannt, der so den Schneidenträger bildet. Hier ist die ringförmige Druckkammer besonders vorteilhaft, da auf diese Weise gleichzeitig die Aufspannung des Trägerrings zentriert vorgenommen werden kann.

Die Druckkammer kann dabei vollständig im Schneidenträgerring eingeformt sein. Es entsteht somit ein separat handelbarer Trägerring, der keine speziellen Werkzeuggrundkörper erfordert. Einfacher zu fertigen ist es jedoch, wenn die Druckkammer einerseits durch den Werkzeughalterungsgrundkörper, andererseits durch den übergestülpten Schneidenträgerring eingegrenzt ist. Besonders beim Einsatz von Flüssigkeiten als Druckübertragungsmittel ist dabei eine Abdichtung des Spalts zwischen Schneidenträgerring und Grundkörper erforderlich. Die Abdichtung kann dabei durch festen Presssitz des Rings auf dem Grundkörper gegeben sein. Andererseits kann die Abdichtung auch durch eine umlaufende Verlötung erfolgen, mit der der Trägerring gleichzeitig auf dem Grundkörper befestigt werden kann. Auch der Einsatz von Simmeringen, O-Ringen o.ä. Dichtungen wäre denkbar.

Die vorgeschlagene Einstelleinrichtung eignet sich insbesondere auch für Stufenfeinbearbeitungswerkzeuge. Hierzu weist der Werzeughalterungs-Grundkörper eine zentrale Werkzeugaufnahme auf, in die ein Werkzeugschaft eines zusätzlichen Werkzeugs vorteilhaft über ein Dehnspannfutter eingespannt werden kann. Auch andere Futter wären denkbar, aufgrund der guten Rundlaufgenauigkeit hat sich jedoch der Einsatz eines Dehnspannfutters als sinnvoll erwiesen. Dabei ergibt sich der zusätzliche Vorteil, dass eine Kopplung der erfindungsgemäßen Einstellvorrichtung mit dem Dehnspannfutter vorgenommen werden kann.

So wird in einer Ausführungsform die Druckkammer sowohl für das Dehnspannfutter als auch für die Einstellvorrichtung genutzt. Dabei ergibt sich ein vergleichsweise einfacher und kostengünstiger Aufbau des Werkzeugs. Andererseits ist aber zu beachten, dass die Innenwand der Druckkammer gegen das zentral eingespannte Werkzeug gedrückt wird, während die Außenwand der gleichen Druckkammer als zur Einstellvorrichtung gehöriger Dehnungskörper dient, wodurch sich eine unerwünschte Zwangskopplung der beiden Spannsysteme ergibt. Eine Einstellung der am Außenumfang angebrachten Schneiden ist somit nur mehr in einem Parameterbereich möglich, der der Einspannung des zentralen Werkzeugs Rechnung trägt.

In der weiteren vorteilhaften Ausführungsform weist das Werkzeug daher für Dehnspannfutter und Einstelleinrichtung getrennte Druckkammern auf, die über eine Druckkopplung miteinander in Verbindung stehen. Diese Bauweise ist zwar deutlich aufwändiger, doch ist auf diese Weise zumindest die Lage, Form und Größe der Druckkammer der Einstelleinrichtung unabhängig vom Dehnspannfutter wählbar. Der Druck in den beiden Systemen bleibt jedoch eine gemeinsame Größe, da die Druckkammern eine Druckkopplung aufweisen.

Zwar ist somit der Druck der Einstellvorrichtung noch immer nicht unabhängig von demjenigen des Spannfutters wählbar, aber durch geschickte Wahl der Geometrie der Druckkammern, bzw. Wanddicke der Dehnungswände kann doch sichergestellt werden, dass innerhalb eines gewünschten Bereichs trotz der Druckverstellung zur Einstellung der Lage der am Außenumfang angebrachten Schneiden eine genügend feste Einspannung des zentralen Werkzeugs erhalten bleibt. Aufgrund der Druckkopplung kann jedoch eine Druckerzeugungseinrichtung gemeinsam genutzt werden, so dass keine getrennte Anbindung der Druckkammern an die Druckerzeugungseinrichtung benötigt wird, wodurch Kostenvorteile realisiert werden können. Darüberhinaus wäre es zumindest theoretisch denkbar, über Druckbegrenzungsventile u.ä. die Druckkopplung in gewünschter Weise auf bestimmte Druckbereiche zu begrenzen.

Noch aufwändiger ist eine vollständige Trennung des Dehnspannfutters von der Einstelleinrichtung. Dabei kann jedoch bei minimaler gegenseitiger Beeinflussung einerseits die Schneidenlage der (Stufen-)Schneiden, andererseits die Spannkraft des Dehnspannfutters zur Aufnahme des (vorschneidenden) Zentralwerkzeugs eingestellt werden.

Die einzelnen Merkmale der Ausführungsformen lassen sich, soweit es sinnvoll erscheint, beliebig kombinieren. Auch ist die Erfindung nicht auf die genannten Ausführungsformen beschränkt, so ist beispielsweise neben einer eindimensionalen, insbesondere radialen Schneidenverstellung auch eine mehrdimensionale, z.B. gleichzeitig radiale und axiale Schneidenverstellung möglich, ohne den Rahmen der Erfindung zu verlassen. Dabei können zwei Wände einer Druckkammer als Dehnungswände dienen, aber auch mehrere Druckkammern mit jeweils einer Dehnungswand vorgesehen sein.

Nachfolgend werden anhand schematischer Zeichnungen bevorzugte Ausführungsformen der Erfindung näher erläutert. Es zeigen:
Fig. 1 eine schematische Prinzipskizze, mit der die erfindungsgemäße Einstellungseinrichtung erläutert wird;
Fig. 2 einen vergrößerten Ausschnitt der Darstellung der Fig. 1;
Fig. 3 eine schematische Prinzipskizze einer weiteren Ausführungsform der erfindungsgemäßen Einstelleinrichtung;
Fig. 4 eine Seitenansicht einer Ausführungsform des erfindungsgemäßen Feinbearbeitungswerkzeugs;
Fig. 5 eine Seitenansicht einer weiteren Ausführungsform des erfindungsgemäßen Feinbearbeitungswerkzeugs;
Fig. 6 eine Seitenansicht einer weiteren Ausführungsform des erfindungsgemäßen Feinbearbeitungswerkzeugs;
Fig. 7 eine Seitenansicht einer weiteren Ausführungsform des erfindungsgemäßen Feinbearbeitungswerkzeugs;
Fig. 8 eine Seitenansicht einer weiteren Ausführungsform des erfindungsgemäßen Feinbearbeitungswerkzeugs;
Fig. 9 eine Querschnittansicht der in Fig. 8 gezeigten Ausführungsform entlang der Schnittlinie IX - IX;
Fig. 10 eine Detailansicht der Einzelheit X in Fig. 8;
Fig. 11 eine Schnittansicht eines Schneidenträgerrings für das in den Figs. 8 bis 10 gezeigte Feinbearbeitungswerkzeug;
Fig. 12 eine Schnittansicht einer weiteren Ausführungsform des Schneidenträgerrings;
Fig. 13 einen Ausschnitt einer weiteren Ausführungsform der Erfindung;
Fig. 14 ein Diagramm, in dem die Übertragungsfunktion einer erfindungsgemäßen Einstelleinrichtung quantitativ angetragen ist;
Fig. 15 eine Skala an einem Drehregler, an der die Schneideneinstellung pro Winkelsegment ablesbar ist.

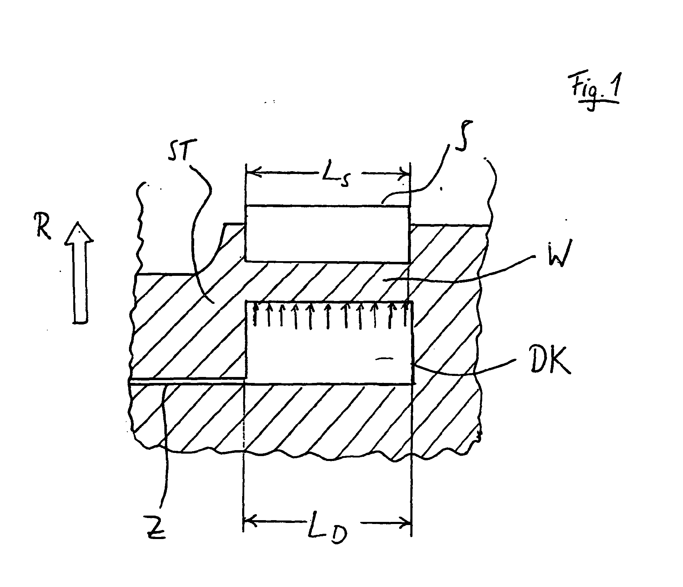

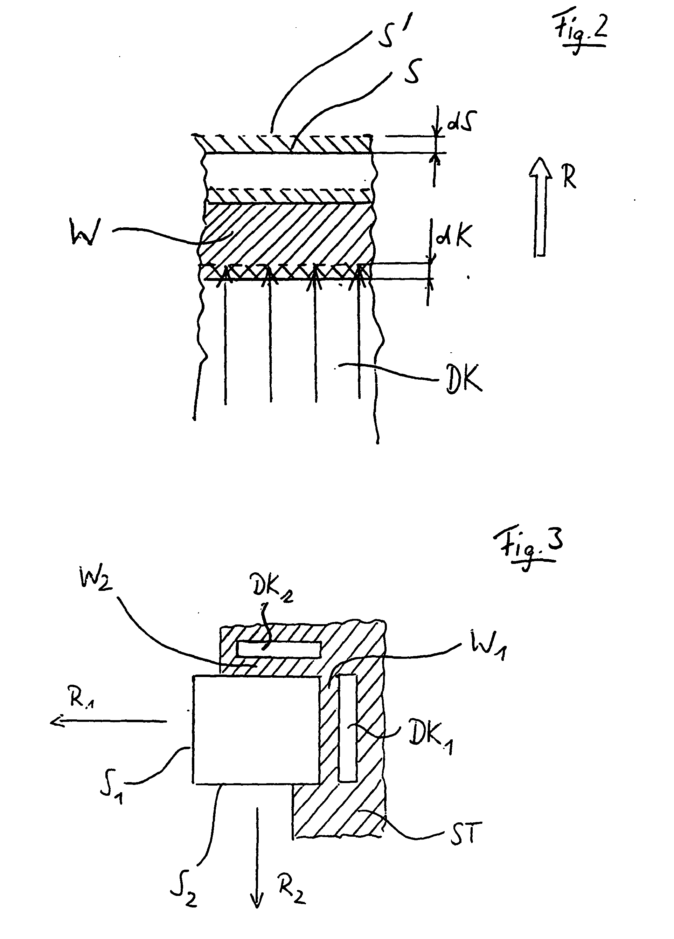

Zunächst wird auf die Figuren 1 und 2 bezug genommen. Dort wird das Wirkprinzip der erfindungsgemäßen Einstelleinrichtung verdeutlicht. Unterhalb einer Schneide S ist eine Druckkammer DK angeordnet, die mit einem Druckübertragungsmittel gefüllt ist und über eine Zuleitung Z mit Druck beaufschlagt wird. Zwischen der Schneide S auf einer Wechselschneidplatte und der Druckkammer DK befindet sich eine Außenwand W der Druckkammer DK mit geringer Dicke, während die Druckkammer ansonsten durch Vollmaterial eingeschlossen ist. Wie durch die Pfeile in der Druckkammer DK verdeutlicht, erfährt die Außenwand W der Druckkammer DK beim Anlegen eines äußeren Drucks eine flächige Belastung. Überschreitet diese Belastung einen bestimmten Wert, wird die Wand W in Richtung R verformt. Da die Länge L_{D} der Druckkammer der Länge L_{S} der Schneide entspricht, kommt es über die Schneidenlänge L_{S} in weiten Teilen zu einer Ausdehnung der Druckkammer nach außen, d.h. im wesentlichen zu einer Verschiebung der Wand W nach außen. Insbesondere an den Kanten wird die Wand W gebogen und gedehnt, so dass es in kantenfernen Bereichen der Wand W zu der in Fig. 2 dargestellten Verschiebung der Wand W kommt. Daneben tritt aber auch eine elastische Materialstauchung in Verschiebungs-, d.h. in Einstellrichtung auf. Aufgrund des geringen Ausmaßes der Stauchung der Wand W im Vergleich zur Verschiebung, wurde dieser Effekt in der Fig. 2 bewusst vernachlässigt. Die Zeichnung zeigt daher idealisiert einen (infinitesemal kleinen) Abschnitt der Wand W , der unter Innendruck in der Druckkammer DK nach außen gedrückt wird. In der idealisierten Darstellung entspricht dabei die Ausdehnung dK der Kammer der Verschiebung dS der Schneide.

Wie in Fig. 3 gezeigt, kann eine derartige Einstellung auch mehrdimensional erfolgen: Eine erste Druckkammer DK1 und eine zweite Druckkammer DK2 drücken dabei über eine Wand auf eine Wechselplatte, wobei mit der ersten Druckkammer die Lage der Schneide S1 in einer ersten Richtung R1 einstellbar ist, während mit der zweiten Druckkammer DK2 die Lage der zweiten Schneide S2 in einer zweiten Richtung R2 einstellbar ist. Auf diese Weise kann beispielsweise die Radialkoordinate der Nebenschneide und die Axialkoordinate der Hauptschneide an den Stufenschneiden eines Stufenbohr- bzw. -reibwerkzeugs eingestellt werden.

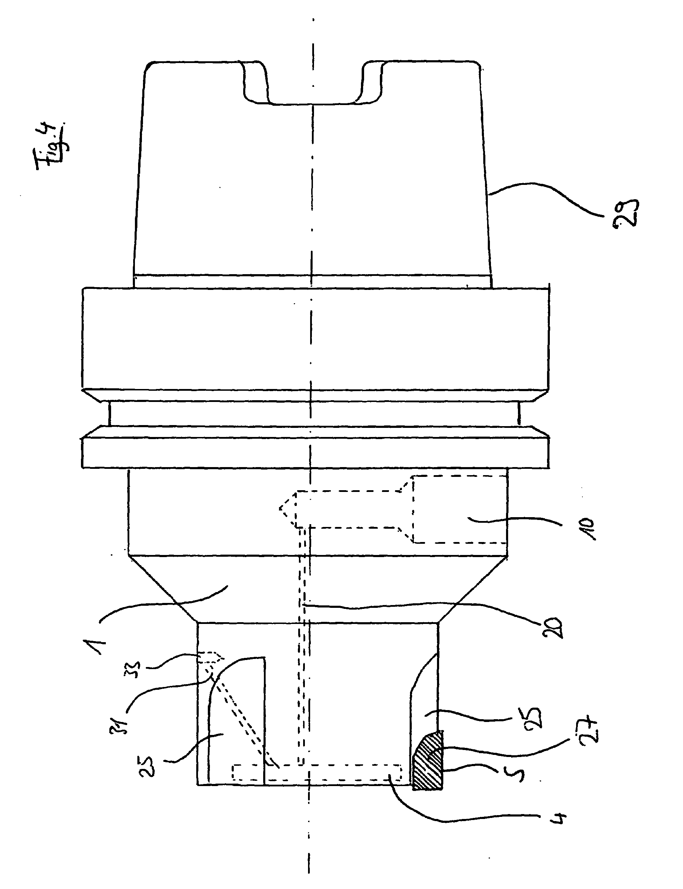

Fig. 4 zeigt eine erfindungsgemäße, dreischneidige Reibahle. Zur Ankupplung an eine Werkzeugmaschine weist das Werkzeug eine HSK-Schnittstelle in Form eines genormten Hohlschafts mit zwei Mitnehmernuten auf. An der Werkzeugspitze sind an den Werkzeughalterungs-Grundkörper 1 Wechselschneidplatten 27 in Führungsschienen 25 angeschraubt. Die wechselschneidplatten 27 weisen dabei jeweils eine Schneidkante S auf, die (unter einem geringen Freiwinkel) in etwa parallel zur Werkzeugdrehachse verläuft. Radial innerhalb der Wechselschneidplatten 27 mit den Schneiden S befindet sich eine gestrichelt eingezeichnete Druckkammer 4, die sich dabei axial im Bereich der Schneidenecke bzw. Schneidenspitze befindet. Die Druckkammer steht über einen Verbindungskanal 20 mit einer Sacklochbohrung 10 in Verbindung. Mittels einer Innensechskantschraube, die in die Sacklochbohrung 10 eingeschraubt wird, kann ein Druck erzeugt und durch ein geeignet gewähltes Druckübertragungsmittel, beispielsweise Hydrauliköl, in die Druckkammer eingebracht werden. Dadurch erfährt die Wand zwischen Druckkammer und den Wechselschneidplatten eine Druckbelastung und wird radial nach außen gedrückt. Die Druckkammer erstreckt sich dabei ringförmig über den gesamten Umfang des Werkzeugs. Aufgrund der gleichförmigen Druckverteilung auf den Gesamtumfang kommt es daher neben einer an allen Schneiden S gleich großen radialen Lageverstellung zu einer Zentrierung der Werkzeugschneiden S. Außerdem kommt es aufgrund der der Schneidenecke zugewandten Anordnung der Druckkammer bei der Lageverstellung der Schneide zu einer winkligen Auslenkung der Schneidkante gegenüber der Drehachse. Um eine blasenfreie Befüllung der Druckkammer mit der Hydraulikflüssigkeit zu ermöglichen ist des Weiteren eine Bohrung 33 für eine Entlüftungsschraube vorgesehen, die über einen Stichkanal 31 mit der Druckkammer 4 in Verbindung steht.

Auch bei den in den weiteren Figuren dargestellten Ausführungsformen ist eine derartige Entlüftung vorgesehen. Aus Gründen der Übersichtlichkeit wurde in den weiteren Figuren jedoch auf die Darstellung dieser Entlüftung verzichtet. Ebenfalls verzichtet wurde auf die Darstellung einer werkzeugeigenen Kühlmittelzufuhr, über die die Schneiden des Werkzeugs mit Kühlmittel aus einer maschinenseitigen Kühlmittelzufuhr versorgt werden können. Im Rahmen der Erfindung kann eine derartige Eigenkühlung selbstverständlich dennoch vorgesehen sein.

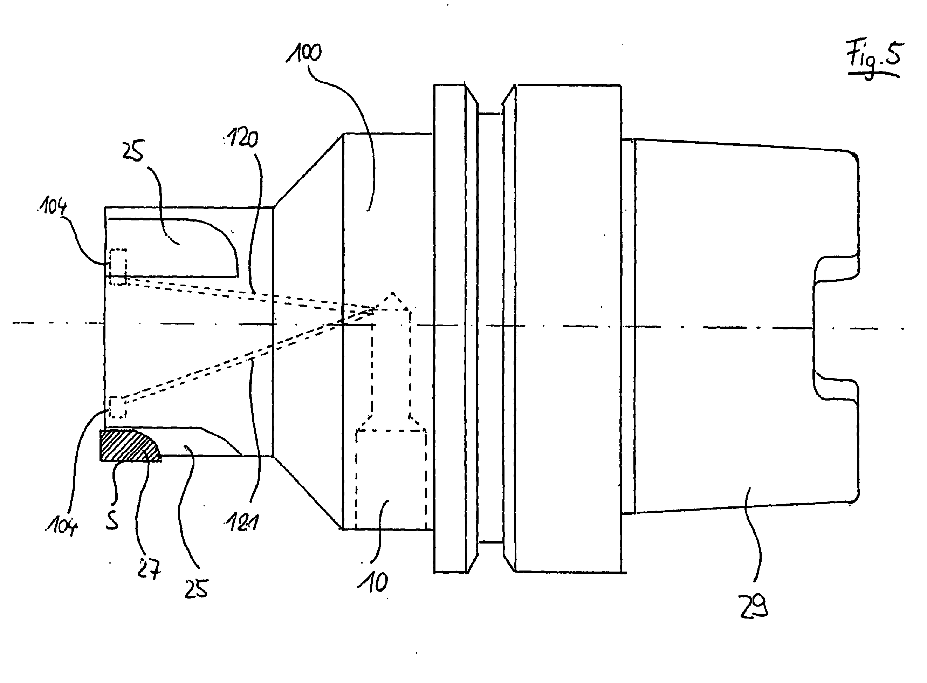

Auch Fig. 5 zeigt eine erfindungsgemäße Reibahle mit drei Schneiden 27 und HSK-Schnittstelle 29. Zur besseren Übersichtlichkeit sind dabei nur die zu den beiden dem Betrachter zugewandten Schneiden gehörigen Abschnitte der Einstelleinrichtung mit gestrichelter Linie gezeigt. Wiederum sind an den Werkzeughalterungs-Grundkörper 100 Wechselschneidplatten 27 in Führungsschienen 25 geschraubt. Abweichend von der in Fig. 4 gezeigten Ausführungsform befindet sich aber unter jeder Schneide S jeweils eine separate, lokal auf den Schneidenbereich begrenzte Druckkammer 104, die über Verbindungskanäle 120, 121 mit der Sacklochbohrung 10 in Verbindung stehen. Aufgrund des kleineren Kammervolumens und der geringeren Hydrofluidmenge kommt es dabei zu einer direkteren Übertragung der per Innensechskantschraube aufgebrachten Kraft.

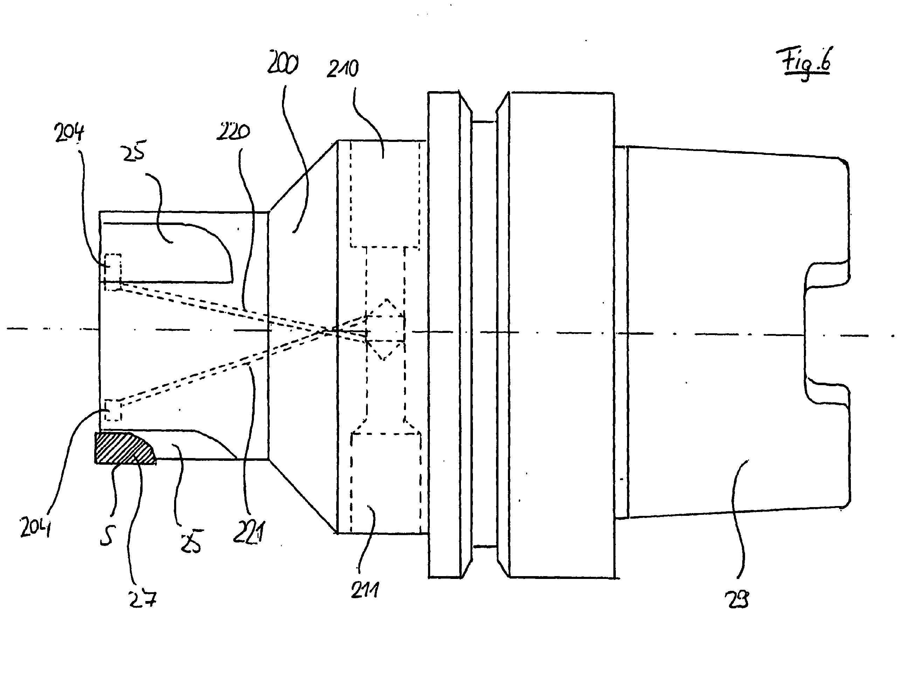

Auch bei der in Fig. 6 gezeigten Ausführungsform der Erfindung, einer dreischneidigen Reibahle, sind nur die den beiden dem Betrachter zugewandten Schneiden S zugeordneten Abschnitte der Einstelleinrichtung mit gestrichelter Linie gezeigt. Die Schneiden S sind dabei einzeln verstellbar. Über Druckkammern 204, die sich jeweils unter den Führungen 25 befinden, sind die jeweiligen Schneiden S radial verstellbar. Jede Druckkammer 204 ist über einen eigenen Verbindungskanal 220, 221 mit einer separaten Sacklochbohrung 210, 211 verbunden und somit unabhängig von der Einstellung der anderen Schneiden getrennt druckbeaufschlagbar. Auf diese weise ist es möglich, eine Unwucht oder Rundlaufungenauigkeit der Werkzeugaufhängung auszugleichen oder beispielsweise eine Schneide als vorschneidend mit größerer Radialauslenkung als die beiden anderen zu definieren, um so beispielsweise zwei Schneiden eine reine Abstützfunktion zuzuordnen, während nur eine Schneide tatsächlich schneidet.

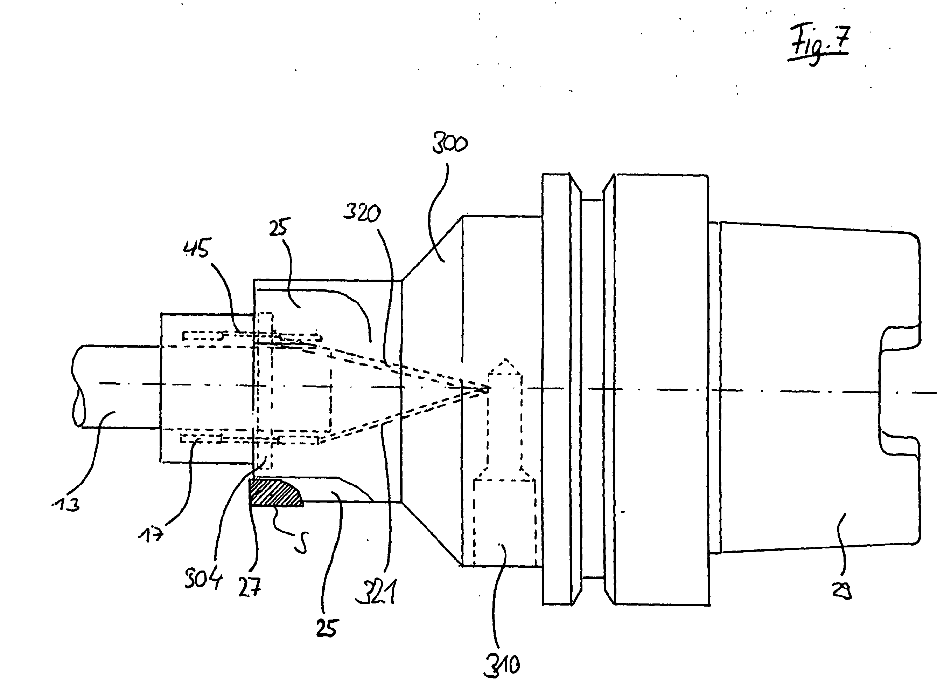

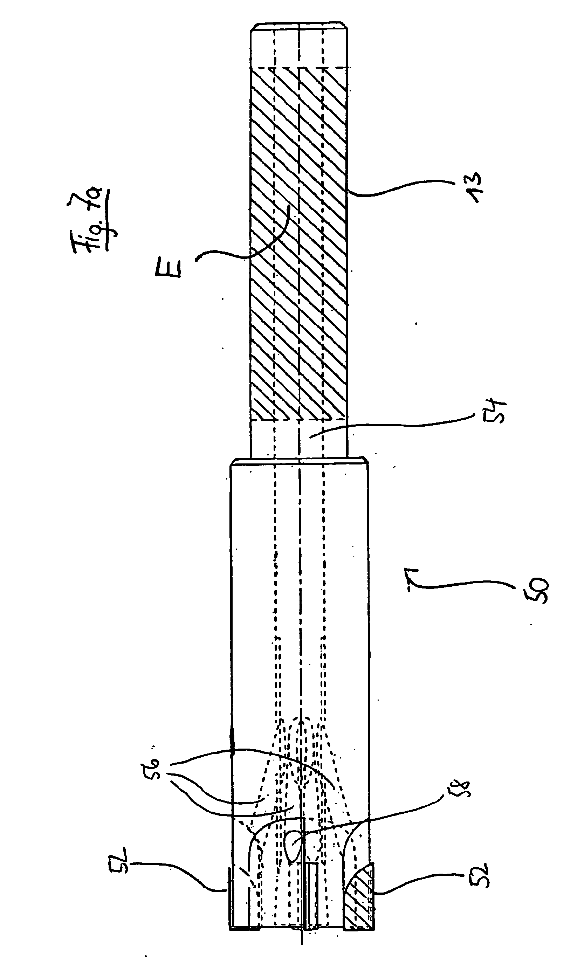

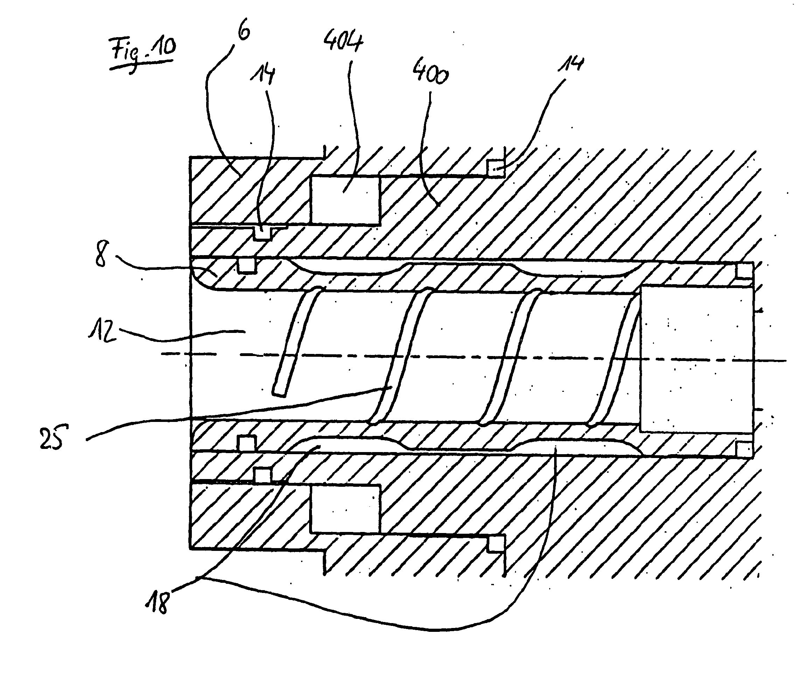

Neben dem Einsatz der erfindungsgemäßen Einstelleinrichtung bei Reibahlen, wie in den Fig. 4 bis 6 gezeigt, eignet sich die Einstelleinrichtung auch für Stufenwerkzeuge, insbesondere Stufenreibahlen, bei denen neben den am Außenumfang der Werkzeughalterung befestigten Schneiden noch zusätzlich zentral ein Werkzeugschaft eines Einsatz-Werkzeuges in einer Aufnahme mit einem Spannfutter eingespannt ist. Dabei können Standard-Spannfutter oder Schrumpfspannfutter eingesetzt werden. Besonders vorteilhaft ist jedoch'die Verwendung eines Dehnspannfutters. Denn bei derartig gestalteten Feinbearbeitungswerkzeugen können Teile der Einstellvorrichtung gleichzeitig als Bestandteil des Dehnspannfutters genutzt werden. Stufenreibahlen in dieser Ausgestaltung der Erfindung sind in den Fig. 7 bis 13 gezeigt.

Das in der Fig. 7 dargestellte Werkzeug 300 mit HSK-Schnittstelle 29 weist dabei ein Hydro-Dehnspanfutter mit zwei ringförmigen Druckkammern 17 auf, in das ein Werkzeugschaft 13 eingespannt ist. Die beiden ringförmigen Druckkammern 17 des Hydro-Dehnspanfutters sind dabei über Verbindungskanäle 45 miteinander verbunden. Über einen weiteren Verbindungskanal 321 ist das Dehnspanfutter ferner an eine Sacklochbohrung 310 angeschlossen. Die Stufenschneiden S des Stufenwerkzeugs werden durch Wechselschneidplatten 27 gebildet, die an einer Durchmessererweiterung des Werkzeugs in Führungen 25 angebracht sind. Die Schneiden S der Wechselschneidplatten 27 sind dabei über eine Einstelleinrichtung radial verstellbar, wobei die Einstelleinrichtung eine ringförmige Druckkammer 304 im vorderen Bereich der Schneiden S aufweist, die über einen Verbindungskanal 320 mit der Sacklochgewindebohrung 310 in Verbindung steht. Mit einer in die Gewindebohrung 310 eindrehbaren Schraube kann somit gleichzeitig der Druck in den Ringkammern 17 des Dehnspannfutters und der Ringkammer 304 der Schneidenlage-Einstelleinrichtung erhöht werden.

Dabei kann beispielsweise ein zentral einspannbares Reibahlenwerkzeug 50 in das Hydrodehnspannfutter eingespannt werden. Ein solches Werkzeug 50 wird beispielhaft in der Fig. 7a gezeigt. Beim entstehenden Gesamtwerkzeug fällt der zentral eingespannten Reibahle dann die Funktion zu, einen ersten Stufenbohrungsabschnitt mit niedrigem Durchmesser auszureiben, während mit den Schneiden S an der Durchmessererweiterung des Gesamtwerkzeugs ein zweiter Abschnitt der Stufenbohrung mit größerem Durchmesser ausgerieben wird.

Besonders geeignet ist das Stufenfeinbearbeitungswerkzeug mit Hydrodehnspannfutter zum Bearbeiten von Bohrungen, bei denen der erste Bohrabschnitt mit kleinerem Durchmesser relativ tief ist. In diesem Fall ist es Voraussetzung, um ein Ausreiben der Bohrung in einem Arbeitsgang vor und nach der Stufe zu ermöglichen, dass das Einsatz-Werkzeug 50 relativ lang ist, d.h. dass die Schneiden 52 des Werkzeugs relativ weit von der Einspannung E in das Dehnspannfutter entfernt sind. Mit dem Dehnspannfutter kann eine gut zentrierte Einspannung erreicht werden, so dass der sich bis zur Werkzeugspitze hin aufkumulierende Rundlauffehler sehr klein ist und hohe Standzeiten und niedrige Maßabweichungen erzielt werden können. Gleichzeitig hält sich der Mehr-Aufwand für das Dehnspannfutter gegenüber herkömmlichen Spannfuttern aufgrund der Synergieeffekte mit der erfindungsgemäßen Einstelleinrichtung in Grenzen. Die Einstellung der radialen Lage der Stufenschneiden S dient andererseits dazu, um die hohe Maßgenauigkeit im Vorbohrabschnitt auch im Bereich größeren Durchmessers der Bohrung zu halten.

Das in der Fig. 7a gezeigte Einsatz-Werkzeug 50 zur Einspannung in das zentrale Hydrodehnspannfutter des erfindungsgemäßen Werkzeugs in den Ausführungsformen der Figs. 7 und 8 bis 13 sieht darüber hinaus noch eine Eigenkühlmittelzufuhr vor. Über einen zentralen Kühlkanal 54 entlang der Werkzeuglängsachse kann von einer maschinenseitig vorgesehenen Kühlmittelzufuhr aus über Verteilerkanäle 56 Kühlmittel zu den' Schneiden 52 geleitet werden, dass an Austrittsöffnungen 58 austritt. Es ist dabei möglich, dass zur Schneidenkühlung/Spanabfuhr verwendete Schmiermittel auch zur Befüllung der Druckkammern der erfindungsgemäßen Einstelleinrichtung bzw. des Dehnspannfutters einzusetzen.

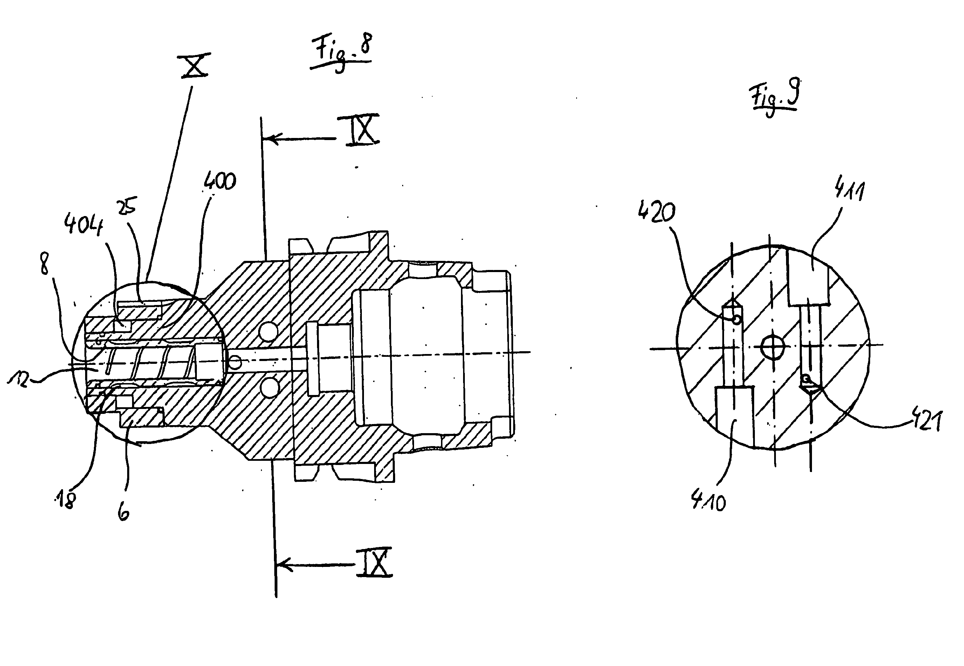

Eine weitere Ausführungsform des erfindungsgemäßen Feinbearbeitungswerkzeugs ist in den Figuren 8 bis 11 gezeigt.

Im Gegensatz zu der in Fig. 7 gezeigten Ausführungsform der Erfindung ist hier eine Lageverstellung der (drei) Stufenschneidkanten unabhängig vom Einspanndruck des Dehnspannfutters möglich. In der Ausführungsform der Fig. 7 wird die Druckkammer der Einstellvorrichtung durch Anziehen der gleichen Schraube wie die Druckkammern des Dehnspannfutters unter Druck gesetzt. Demgegenüber besteht bei der in Fig. 8 gezeigten Ausführungsform keine Druckkopplung zwischen der Druckkammer 404 der Einstelleinrichtung zur Lageeinstellung der Stufenschneidkanten und den Druckkammern 18 des Hydrodehnspannfutters.

Wie insbesondere der Fig. 9 zu entnehmen ist, sind am Werkzeughalterungs-Grundkörper 400 dazu zwei separate Sacklochbohrungen 410, 411 zur Aufnahme von Druckschrauben vorgesehen. Die mit 410 bezeichnete Sacklochbohrung ist dabei über einen Verbindungskanal 420 mit der Druckkammer 404 verbunden, während die mit 411 bezeichnete Sacklochbohrung über einen weiteren Verbindungskanal 421 mit den Druckkammern 18 des Hydrodehnspannfutters in Verbindung steht. Eine Druckregulierung an den Schrauben erfolgt somit für Hydrodehnspannfutter und Einstelleinrichtung getrennt.

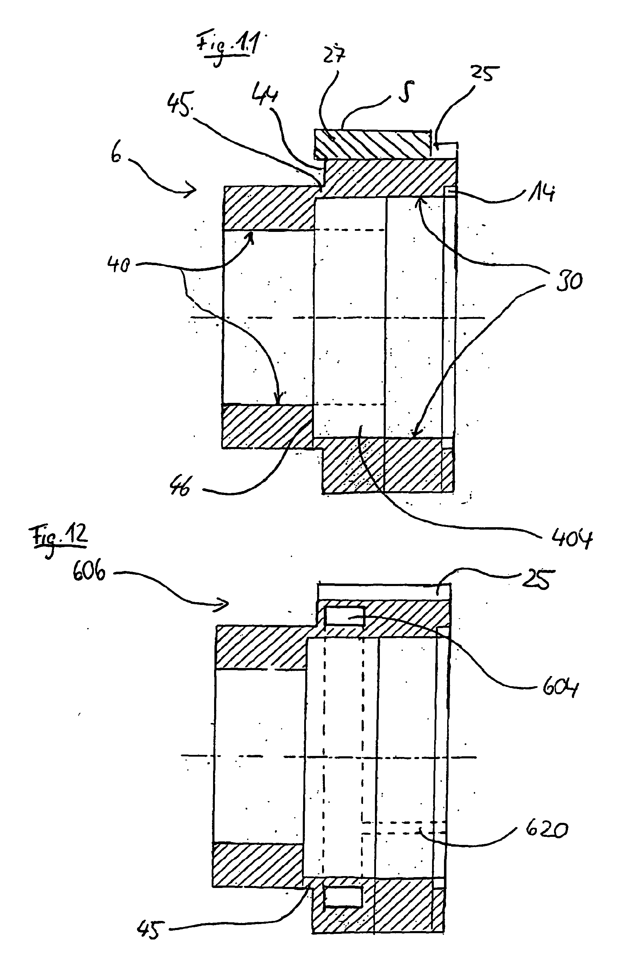

Auf den Werkzeughalterungs-Grundkörper 400 ist dabei eine Hülse 6 aufgesetzt, die in Fig. 11 im Detail gezeigt ist. Der Grundkörper 400 und die Hülse 6 umschließen die ringförmige Druckkammer 404, die mit der Sacklochbohrung 420 und einer nicht gezeigten Entlüftungsbohrung über den in den Grundkörper 400 eingebohrten Kanal 421 und einen Entlüftungskanal in Verbindung steht. Die Druckkammer 404 ist in Fig. 11 gestrichelt angedeutet. Wie zu erkennen ist, befindet sie sich dabei axial auf Höhe der Schneidenecke der Schneide S. Die Schneide S ist an einer Wechselschneidplatte 27 ausgebildet, die in einer Führung 25 aufgenommen sind.

Die Schneidplatten stehen dabei an ihrem vorderen Ende etwas über eine Schulter 44 über, an der die Dehnhülse 6 verjüngt. Innenseitig ist dabei der die Druckkammer 404 bildende Bereich zur Werkzeugspitze hin ebenfalls durch eine Schulter 46 begrenzt. Dabei verläuft die Schulter 46 im wesentlichen auf einer Ebene mit der axialen Schneidkante der Wechselplatte 27. Unterhalb der Schneidenecke befindet sich somit eine Material-Schwachstelle 45 im Materialverlauf der Hülse 6. Auf diese weise wird eine besonders große Verformung der Außenwand der Druckkammer 404 unterhalb der Schneidenecke hervorgerufen und gleichzeitig das Material im vorderen Bereich (der Werkzeugspitze zugewandten) der Dehnhülse 6 von der Dehnwand entkoppelt.

Die Hülse 6 weist innenseitig an den Bereichen 30, 40, an denen sie auf den Werkzeug-Grundkörper 400 aufgepresst wird eine hohe Oberflächengüte auf, um einen passgenauen Sitz der Hülse 6 auf dem Grundkörper 400 zu gewährleisten. Auf diese Weise erfolgt schon eine gewisse Abdichtung der Druckkammer 404. Zusätzlich ist auf einer Seite der Druckkammer 404 am Axialende der Hülse 6 sowie auf der gegenüberliegenden Seite der Druckkammer 404 am Grundkörper 400 je eine umlaufende Nut vorgesehen, die beim Einbau der Hülse mit Lot gefüllt ist und so eine feste Verlötung der Hülse 6 auf dem Grundkörper 400 und damit eine gute Abdichtung der Druckkammer 404 nach außen erlaubt.

Fig. 12 zeigt als abgewandelte Ausführungsform die Dehnhülse 606. Sie ist in wesentlichen Teilen baugleich mit der in Fig. 11 gezeigten Dehnhülse, weist allerdings eine im Material der Hülse eingeformte, ringförmige Druckkammer 604 auf, die über einen eingebohrten Kanal 620 an eine entsprechende Druckmittelzufuhr anschließbar ist und somit ebenfalls auf einen geringfügig modifizierten Werkzeughalterungs-Grundkörper 400 aufpassbar wäre.

Am Werkzeughalterungs-Grundkörper 400 ist des Weiteren eine Dehnbuchse 8 in die zentrale Werkzeugaufnahme 12 eingeschoben, die ebenfalls mit dem Grundkörper 400 verlötet und so gegen die Umgebung abgedichtet am Grundkörper 400 befestigt ist. Zwischen der Dehnbuchse 8 und und dem Grundkörper 400 sind zwei ringförmige Druckkammern 18 eingeschlossen, die über schmale Schlitze verbunden sind. Die Druckkammern stehen über den Verbindungskanal 421 mit der Sacklochbohrung 411 in Verbindung, mit der somit der Einspanndruck des Spannfutters gesteuert wird. Aufgrund der zur Außenseite der Druckkammer 404 und der Innenseite der Druckkammern 18 hin kleineren Wandstärke als auf der aufeinanderzu gerichteten Seite kommt es dabei nur zu einer marginalen gegenseitigen Beeinflußung der beiden Dehnspannhydrauliken, so dass die Lage der Schneiden S unabhängig von der Spannkraft des Hydrodehnspannfutters mit hoher Präzision eingestellt werden kann. Zur Aufnahme von an einem Werkzeugschaft haftenden' Schmutz oder Ölrückstand ist innenseitig an der Dehnbuchse ferner noch eine umlaufende Nut 25 vorgesehen.

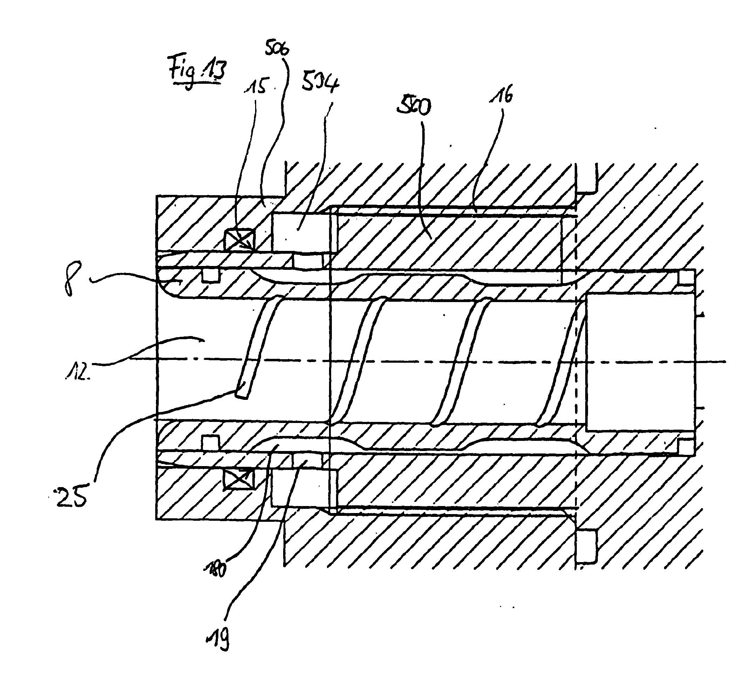

Fig. 13 zeigt schließlich eine Ausführungsform des erfindungsgemäßen Stufenfeinbearbeitungswerkzeugs, bei der die Druckkammer 504 der Einstelleinrichtung über eine radial eingebohrte Verbindungspassage 19 mit den Druckkammern 180 des Hydrodehnspannfutters in Verbindung stehen. Die außen auf den Werkzeuggrundkörper 500 aufgesetzte Dehnhülse 506 weist dabei an ihrem hinteren Abschnitt ein Innengewinde 16 auf, mit dem es auf ein entsprechendes Außengewinde am Grundkörper 500 aufschraubbar ist. Vorderseits ist zur Abdichtung der Druckkammer 504 des Weiteren noch eine Dichtung 15 vorgesehen.

Bei keiner den gezeigten Ausführungsformen wurde die zur Druckeinstellung vorgesehene Schraube dargestellt. Es ist aber klar, dass im Rahmen der Erfindung Abdichtungsmaßnahmen zur Abdichtung der Spannhydraulik ergriffen werden können. Insbesondere kann vorgesehen sein, dass die Schraube nicht direkt das Hydraulikfluidvolumen verkleinert, sondern über einen gut abdichtend in einem Hydraulikzylinder geführten Kolben.

Neben einer Drucksteuerung über eine Innensechskantschraube mittels eines Imbusschlüsses etc., besteht bei den genannten Ausführungsformen eine weitere sinnvolle Ausgestaltung in einem Aufsatz auf die Innensechskantschraube, beispielsweise einem mit einer Markierung versehenen Rändelrad. Mit einer über den Umfang des aufzusetzenden Rändelrads angetragenen Skala an der Werkzeughalterung ist es dann möglich, durch einen Abgleich der Markierung auf dem Rad mit der Skala eine direkte Steuerung der Schneidkantenverstellung vorzunehmen. Die Skala bezieht sich dabei neben der unveränderlichen Geometrie der Werkzeughalterung notwendigerweise auf festgelegte Betriebsgrößen der Einstelleinrichtung, also beispielsweise Temperatur, Hydraulikfluid, etc. Die als Skala angetragenen Kennung kann somit zwar nur unter den festgelegten Bedingungen eine iterative Schneideneinstellung (Anziehen der Schraube, Messen der Schneidenverstellung an der Schneide, Nachziehen der Schraube usw.) ersetzen. Aber auch bei abweichenden Betriebsbedingungen erhält der Bediener einen ersten Anhaltspunkt, wie weit er die Schraube anziehen soll, um die gewünschte Schneideneinstellung zu erreichen.

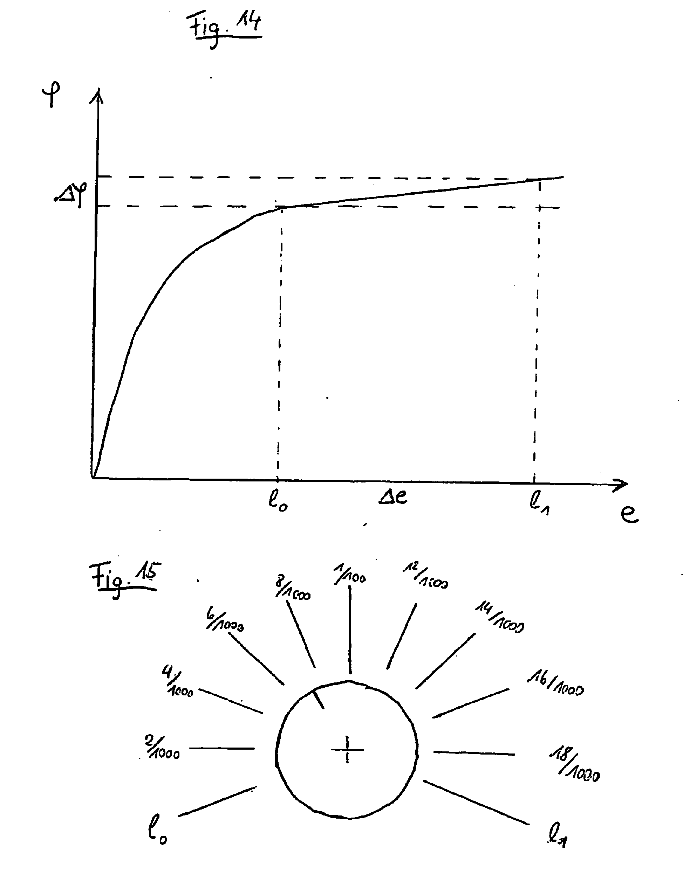

Eine obenstehend beschriebene Skala ist in Fig. 15 dargestellt. Im dargestellten Beispiel entspricht ein Winkelsegment von 22,5° einer Lageverstellung der Schneide um 2/1000 mm. Die Skala bildet also eine lineare Übertragungsfunktion der Schraubendrehung zur Verstellung der Schneide (ϕ/e) ab.

Eine derartige Übertragungsfunktion kann quantitativ der Fig. 14 entnommen werden. Es zeigt sich, dass es nach einem anfänglich unterproportionalen Anstieg der Schneidenverstellung pro Winkelsegment Schraubenumdrehung ein linearer Zusammenhang Schraubenverdrehung / Schneidenverstellung einsetzt (l₀). Der lineare Bereich zwischen den beiden Punkten l₀ und l₁ (Δl) ist dabei auf der Skala der Fig. 15 abgebildet. Dabei entspricht eine Schraubendrehung von 135° (Δϕ) einer Schneidenverstellung von 2/100 mm (Δl). Den Aufpunkt l₀ zum Messbereich erhält der Bediener dadurch, dass es sich um die erste Schraubenumdrehung handelt, bei der er eine Kraft aufwenden muss, die einen bestimmten Wert überschreitet.

Selbstverständlich sind Abweichungen von den gezeigten Varianten möglich, ohne den Grundgedanken der Erfindung zu verlassen.

Insbesondere könnte eine Druckmessung in der Druckkammer über Piezoaufnehmer vorgesehen sein, wobei die Schneidenverstellung über eine Zuordnung von Druckwerten zu entsprechenden Verstellwerten erfolgen kann. Auch eine automatisierte Schneideneinstellung wäre auf diese Weise realisierbar.

## Patentansprüche

1. Einstelleinrichtung zum Einstellen der Lage einer Schneidkante zumindest einer am Grundkörper (ST; 1; 100; 200; 300) eines Feinbearbeitungswerkzeugs, insbesondere einer Reibahle, befestigten Schneide (S; S1, S2), wobei
die Einstelleinrichtung zumindest eine Druckkammer (DK; DK1, DK2; 4; 104; 204; 304) umfasst, die in Einstellrichtung (R; R1, R2) der Schneide (S; S1, S2) zu dieser versetzt angeordnet und mit einem Druckmittel gefüllt ist, das über eine Zuleitung (Z) mit einer Druckerzeugungseinrichtung unter Druck gesetzt werden kann; und
zwischen der Schneide (S; S1, S2) und der Druckkammer (DK; DK1, DK2; 4; 104; 204; 304) eine Wand (W) verbleibt, die bei Druckbeaufschlagung des Druckmittels zur Einstellung der Schneidenlage elastisch verformbar ist,
**dadurch gekennzeichnet, dass**
die Wand eine elastisch verformbare Außenwand (W) der Druckkammer (DK; DK1, DK2; 4; 104; 204) ist, die sich zwischen der Schneide (S; S1, S2) und der Druckkammer (DK; DK1, DK2; 4; 104; 204; 304) befindet und im Vergleich zu den übrigen einschließenden Wänden der Druckkammer (DK; DK1, DK2; 4; 104; 204; 304) eine geringere Dicke aufweist.

2. Einstelleinrichtung nach Anspruch 1, **dadurch gekennzeichnet, dass** die Schneide (S; S1, S2) und die Druckkammer (DK; DK1, DK2; 4; 104; 204; 304) in Einstellrichtung (R; R1, R2) fluchtend angeordnet sind.

3. Einstelleinrichtung nach Anspruch 1, **dadurch gekennzeichnet, dass** die Länge der Druckkammer (4; 104; 204; 304) in der auf die Einstellrichtung (R; R1, R2) orthogonalen Richtung auf den Bereich der Schneidenecke beschränkt ist.

4. Einstelleinrichtung nach einem der vorhergehenden Ansprüche, **dadurch gekennzeichnet, dass** die elastische Verformung (dK) zwischen Druckkammer (DK) und Schneide (S) im Größenbereich der Schneidenverstellung (dS) liegt.

5. Einstelleinrichtung nach einem der vorhergehenden Ansprüche, **dadurch gekennzeichnet, dass** das Druckmittel eine zumindest näherungsweise inkompressible Flüssigkeit ist.

6. Einstelleinrichtung nach einem der Ansprüche 1 bis 4, **dadurch gekennzeichnet, dass** eine in die Druckkammer einsetzbare Kunststoffhülse als ein Druckübertragungsmittel dient.

7. Einstelleinrichtung nach einem der vorhergehenden Ansprüche, **dadurch gekennzeichnet, dass** die Druckerzeugungseinrichtung eine in eine Sacklochgewindebohrung (10; 210, 211; 310) eindrehbare Schraube umfasst.

8. Einstelleinrichtung nach Anspruch 7, **dadurch gekennzeichnet, dass** die Sacklochgewindebohrung durch einen axialen Abstand von der Druckkammer (4; 104; 204; 304) getrennt und über Verbindungskanäle (20; 120; 220, 221; 320) mit ihr in Verbindung steht.

9. Einstelleinrichtung nach Anspruch 7 oder 8, **gekennzeichnet durch** ein Kennfeld, das eine vorbestimmte Zuordnung zwischen einer Eingangsgröße der Druckerzeugungseinrichtung (10; 210, 211; 310) und der resultierenden Lageverstellung (dS) der Schneide bereitstellt.

10. Einstelleinrichtung nach einem der vorhergehenden Ansprüche, **dadurch gekennzeichnet, dass** die Lage der Schneide (S; S1, S2) in radialer Richtung einstellbar ist.

11. Einstelleinrichtung nach einem der vorhergehenden Ansprüche, **dadurch gekennzeichnet, dass** die Druckkammer (4; 304) ringförmig ausgebildet ist.

12. Einstelleinrichtung nach einem der Ansprüche 1 bis 10, **dadurch gekennzeichnet, dass** die Ausdehnung der Druckkammer (104; 204) in Umfangsrichtung lokal auf den Bereich der Schneide (S) begrenzt ist.

13. Einstelleinrichtung zum Einstellen der Lage einer Schneidkante zumindest einer Schneide (S; S1, S2), die an einem Schneidenträgerring (6; 506; 606), der auf einen Werkzeughalterungs-Grundkörper (400; 500), insbesondere einen Werkzeugspanndorn oder eine Spanndorn-Spannfutter-Kombination (400; 500), aufschiebbar ist, befestigt ist, wobei
die Einstelleinrichtung zumindest eine Druckkammer (404; 504; 604) umfasst, die in Einstellrichtung (R; R1, R2) der Schneide (S; S1, S2) zu dieser versetzt angeordnet, mit einem Druckmittel gefüllt ist, das über eine Zuleitung (Z) mit einer Druckerzeugungseinrichtung unter Druck gesetzt werden kann
**dadurch gekennzeichnet, dass**
die Druckkammer (404; 504; 604) zugleich als Druckkammer eines Dehnspannfutters des Feinbearbeitungswerkzeugs dient;
die Druckkammer (404; 504; 604) eine zwischen der Druckkammer (404; 504; 604) und einem zentral einzuspannenden Werkzeug befindliche Innenwand und eine zwischen der Schneide (S; S1, S2) und der Druckkammer (404; 504; 604) befindliche Außenwand hat, die jeweils im Vergleich zu den übrigen einschließenden Wänden der Druckkammer (404; 504; 604) eine geringere Dicke aufweisen, wobei bei Druckbeaufschlagung des Druckmittels die Innenwand der Druckkammer (404; 504; 604) gegen ein zentral eingespanntes Werkzeug drückbar ist, während die Außenwand der Druckkammer (404; 504; 604) zur Einstellung der Schneidenlage elastisch verformbar ist.

14. Einstelleinrichtung nach Anspruch 13, **dadurch gekennzeichnet, dass** eine Befestigung (14; 16) des Schneidenträgerrings (6; 506; 606) am Grundkörper (400; 500) vorgesehen ist, insbesondere mittels in umlaufenden Nuten (14) aufgenommenem Lot.

15. Einstelleinrichtung nach Anspruch 13 oder 14, **dadurch gekennzeichnet, dass** die Druckkammer (606) vollständig in den Schneidenträgerring (606) eingeformt ist, wobei die Druckkammer (606) über Anschlusskanäle (620) mit dem Druckübertragungsmittel füllbar ist.

16. Einstelleinrichtung nach Anspruch 13 oder 14, **dadurch gekennzeichnet, dass** die Druckkammer (6; 506) durch Grundkörper (1; 2) und daran angebrachten Schneidenträgerring (6; 7) eingegrenzt ist und ein Spalt zwischen Grundkörper und aufgeschobenen Schneidenträgerring (6; 506) gegen Entweichen des Druckübertragungsmittels abgedichtet (40, 30; 15) ist.

17. Einstelleinrichtung, insbesondere für ein Stufenfeinbearbeitungswerkzeug, nach einem der Ansprüche 13 bis 16, **dadurch gekennzeichnet, dass** der Werkzeughalterungs-Grundkörper (400; 500) eine zusätzliche
zentrale Werkzeugaufnahme (12) mit einem zugeordnetem Dehnspannfutter (8, 18) aufweist.

18. Einstelleinrichtung nach Anspruch 17, **dadurch gekennzeichnet, dass** die Druckkammer der Einstelleinrichtung zugleich als Druckkammer des Dehnspannfutters dient.

19. Einstelleinrichtung nach Anspruch 17, **dadurch gekennzeichnet, dass** die Einstelleinrichtung und das Dehnspannfutter getrennte Druckkammern (17, 304; 18, 504) aufweisen, die eine Druckkopplung (320, 321; 19) aufweisen.

20. Einstelleintrichtung nach Anspruch 17, **dadurch gekennzeichnet, dass** die Einstelleinrichtung und das Dehnspannfutter getrennte Druckkammern (18, 404) aufweisen, die unabhängig voneinander unter Druck setzbar sind.

21. Feinbearbeitungswerkzeug, insbesondere Reibahle, **gekennzeichnet durch** eine Einstelleinrichtung nach einem der vorhergehenden Ansprüche.

22. Einstelleinrichtung nach Anspruch 1 oder einem der Ansprüche 4 bis 21, **dadurch gekennzeichnet, dass** die Länge (LD) der Druckkammer (DK; DK1, DK2) in der auf die Einstellrichtung (R; R1, R2) orthogonalen Richtung im wesentlichen der Länge (LS) der Schneide (S) entspricht.

## Claims

1. An adjustment device for adjusting the position of at least one cutting edge of a cutter (S; S1, S2) which is fixed to a base body (ST; 1; 100; 200; 300) of a fine machining tool, particularly a reamer, wherein
said adjustment device comprises at least one pressure chamber (DK; DK1; DK2; 4; 104; 204; 304; 404) which is arranged in the adjustment direction (R; R1, R2) of the cutter (S; S1, S2) with a displacement with respect to it and which is filled with a pressurizing medium which can be placed under pressure via a supply conduit (Z) by a pressure generation device, and wherein
between the cutter (S; S1, S2) and the pressure chamber (DK; DK1; DK2; 4; 104; 204; 304), a wall (W) remains which is elastically deformable upon application of pressure to said pressurizing medium for adjusting the cutter position,
**characterized in that**
said wall is an elastically deformable outer wall (W) of said pressure chamber (DK; DK1; DK2; 4; 104; 204) which is located between said cutter (S; S1, S2) and said pressure chamber (DK; DK1; DK2; 4; 104; 204; 304) and which has, compared to the remaining walls of said pressure chamber (DK; DK1; DK2; 4; 104; 204; 304), a reduced thickness.

2. The adjustment device according to claim 1, **characterized in that** the cutter (S; S1, S2) and the pressure chamber (DK; DK1; DK2; 4; 104; 204; 304) are arranged in alignment in the adjustment direction (R; R1, R2).

3. The adjustment device according to claim 1, **characterized in that** the length of the pressure chamber (4; 104; 204; 304) in the orthogonal direction to the adjustment direction (R; R1, R2) is limited to the region of the tool corner.

4. The adjustment device according to one of the preceding claims, **characterized in that** the elastic deformation (dK) between the pressure chamber (DK) and the cutter (S) lies in the size range of the cutter adjustment (dS).

5. The adjustment device according to one of the preceding claims, **characterized in that** the pressurizing medium is an at least approximately incompressible fluid.

6. The adjustment device according to one of the claims 1 to 4, **characterized in that** a plastic bush which is insertable in said pressure chamber serves as a pressure transfer means.

7. The adjustment device according to one of the preceding claims, **characterized in that** said pressure generation device includes a screw which can be screwed into a blind threaded hole (10; 210; 211; 310).

8. The adjustment device according to claim 7, **characterized in that** the blind threaded hole is separated by an axial distance from the pressure chamber (4; 104; 204; 304) and is connected to it via connecting channels (20; 120; 220; 221; 320).

9. The adjustment device according to claim 7 or 8, **characterized by** a characteristic diagram which provides a predetermined relationship between an input quantity of the pressure generation device (10; 210, 211; 310) and the resulting positional adjustment (dS) of the cutter.

10. The adjustment device according to one of the preceding claims, **characterized in that** the position of the cutter (S; S1, S2) is adjustable in the radial direction.

11. The adjustment device according to one of the preceding claims, **characterized in that** the pressure chamber (4; 304) is formed with a ring shape.

12. The adjustment device according to one of the claims 1 to 10, **characterized in that** the extension of the pressure chamber (104; 204) is limited in the circumferential direction locally to the region of the cutter (S).

13. An adjustment device for adjusting the position of at least one cutting edge of a cutter (S; S1, S2) which is fixed to a cutter support ring (6; 506; 606) which can be slid onto a tool mounting base body (400; 500), particularly a tool clamping mandrel or a clamping mandrel / clamping chuck combination (400; 500), wherein
said adjustment device comprises at least one pressure chamber (404; 504; 604) which is arranged in the adjustment direction (R; R1, R2) of the cutter (S; S1, S2) with a displacement with respect to it and which is filled with a pressurizing medium which can be placed under pressure via a supply conduit (Z) by a pressure generation device,
**characterized in that**
said pressure chamber (404; 504; 604) serves at the same time as pressure chamber of a hydraulic expanding chuck of a fine machining tool,
said pressure chamber (404; 504; 604) has an inner wall located between said pressure chamber (404; 504; 604) and a tool which is to be centrally clamped and an outer wall which is located between said cutter (S; S1; S) and said pressure chamber (404; 504; 604), which walls each have compared to their respective remaining walls of said pressure chamber (404; 504; 604) a reduced thickness, wherein upon pressurization of said pressurizing medium said inner wall of said pressure chamber (404; 504; 604) can be pressed against a centrally clamped tool whilst said outer wall of said pressure chamber (404; 504; 604) is elastically deformable for adjusting the position of said cutter.

14. The adjustment device according to claim 13, **characterized in that** an attachment (14; 16) of the cutter support ring (6; 506; 606) on the base body 400; 500) is provided, particularly by means of solder accommodated in circumferential grooves (14).

15. The adjustment device according to claim 13 or 15, **characterized in that** the pressure chamber (606) is formed or molded entirely into the cutter support ring (606), the pressure chamber (606) being fillable via connecting channels (620) with the pressure transfer medium.

16. The adjustment device according to claim 13 or 14, **characterized in that** the pressure chamber (6; 506) is bounded by said base body (1; 2) and cutter support ring (6;7) applied thereupon, and a gap between base body and slid-on cutter support ring (6; 506) is sealed (40, 30; 15) against leakage of the pressure transfer medium.

17. An adjustment device, particularly for a step fine machining tool, according to one of the claims 13 to 16, **characterized in that** the tool mounting base body (400; 500) has an additional central tool holder (12) with an assigned expansion chuck (8, 18).

18. The adjustment device according to claim 17, **characterized in that** the pressure chamber of the adjustment device serves at the same time as a pressure chamber of the expansion chuck.

19. The adjustment device according to claim 17, **characterized in that** the adjustment device and the expansion chuck have separate pressure chambers (17, 304; 18, 504) which have a pressure coupling (320, 321; 19).

20. The adjustment device according to claim 17, **characterized in that** the adjustment device and the expansion chuck have separate pressure chambers (18, 404) which can be placed under pressure independently of one another.

21. A fine machining tool, particularly a reamer, **characterized by** an adjustment device according to one of the preceding claims.

22. The adjustment device according to claim 1 or one of the claims 4 to 21, **characterized in that** the length (LD) of the pressure chamber (DK; DK1; DK2) in the orthogonal direction to the adjustment direction (R; R1, R2) corresponds essentially to the length (LS) of the cutter (S).

## Revendications

1. Dispositif de réglage pour le réglage de la position d'une arête au moins d'une lame (S ; S1, S2) fixée sur le corps de base (ST ; 1 ; 100 ; 200 ; 300) d'un outil de finition, en particulier un alésoir, sachant que
le dispositif de réglage comporte au moins une chambre de pression (DK ; DK1, DK2 ; 4 ; 104 ; 204 ; 304) disposée dans le sens de réglage (R ; R1, R2) de la lame (S ; S1, S2) en déport de celle-ci et remplie d'un moyen de pression qui peut être mis sous pression par une conduite d'alimentation (Z) ; et
une paroi (W) demeure entre la lame (S ; S1, S2) et la chambre de pression (DK ; DK1, DK2 ; 4 ; 104 ; 204 ; 304), laquelle paroi peut être déformée élastiquement lors de la mise sous pression du moyen de pression pour le réglage de la position de la lame,
**caractérisé en ce que**
la paroi est une paroi extérieure (W) déformable élastiquement de la chambre de pression (DK ; DK1, DK2 ; 4 ; 104 ; 204) qui se trouve entre la lame (S ; S1, S2) et la chambre de pression (DK ; DK1, DK2 ; 4 ; 104 ; 204 ; 304) et présente une épaisseur plus faible que les parois environnantes restantes de la chambre de pression (DK ; DK1, DK2 ; 4 ; 104 ; 204 ; 304).

2. Dispositif de réglage selon la revendication 1, **caractérisé en ce que** la lame (S ; S1, S2) et la chambre de pression (DK ; DK1, DK2 ; 4 ; 104 ; 204 ; 304) sont alignées dans le sens de réglage (R ; R1, R2).

3. Dispositif de réglage selon la revendication 1, **caractérisé en ce que** la longueur de la chambre de pression (4 ; 104 ; 204 ; 304) est limitée dans le sens orthogonal au sens de réglage (R ; R1, R2) à la zone du point d'attaque.

4. Dispositif de réglage selon l'une quelconque des revendications précédentes, **caractérisé en ce que** la déformation élastique (dK) entre la chambre de pression (DK) et la lame (S) se trouve dans la plage de dimensions du réglage de la lame (dS).

5. Dispositif de réglage selon l'une quelconque des revendications précédentes, **caractérisé en ce que** le moyen de pression est un liquide au moins approximativement incompressible.

6. Dispositif de réglage selon l'une quelconque des revendications 1 à 4, **caractérisé en ce qu'**une douille plastique insérable dans la chambre de pression sert de moyen de transmission de pression.

7. Dispositif de réglage selon l'une quelconque des revendications précédentes, **caractérisé en ce que** le dispositif de génération de pression comporte une vis pouvant être vissée dans un taraudage à trou borgne (10 ; 210, 211 ; 310).

8. Dispositif de réglage selon la revendication 7, **caractérisé en ce que** le taraudage à trou borgne est séparé par une distance axiale de la chambre de pression (4 ; 104 ; 204 ; 304) et est en liaison avec elle par des canaux de liaison (20 ; 120 ; 220 ; 221 ; 320).

9. Dispositif de réglage selon la revendication 7 ou 8, **caractérisé par** un champ caractéristique mettant à disposition une association prédéterminée entre une grandeur d'entrée du dispositif de génération de pression (10 ; 210, 211 ; 310) et le réglage de la position résultant (dS) de la lame.

10. Dispositif de réglage selon l'une quelconque des revendications précédentes, **caractérisé en ce que** la position de la lame (S ; S1, S2) est réglable dans le sens radial.

11. Dispositif de réglage selon l'une quelconque des revendications précédentes, **caractérisé en ce que** la chambre de pression (4 ; 304) est réalisée comme un anneau.

12. Dispositif de réglage selon l'une quelconque des revendications 1 à 10, **caractérisé en ce que** l'étendue de la chambre de pression (104 ; 204) dans le sens périphérique est limitée localement à la zone de la lame (S).

13. Dispositif de réglage pour le réglage de la position d'une arête au moins d'une lame (S ; S1, S2), qui est fixée sur un anneau porteur de lame (6 ; 506 ; 606) pouvant être emboîté sur un corps de base de fixation d'outil (400 ; 500), en particulier une broche de serrage d'outil ou une combinaison de broche de serrage et de mandrin de serrage (400 ; 500), sachant que
le dispositif de réglage comporte au moins une chambre de pression (404 ; 504 ; 604) disposée dans le sens de réglage (R, R1, R2) de la lame (S ; S1, S2) en déport de celle-ci, remplie d'un moyen de pression qui peut être mis sous pression par une conduite d'alimentation (Z) avec un dispositif de génération de pression,
**caractérisé en ce que**
la chambre de pression (404 ; 504 ; 604) sert en même temps de chambre de pression d'un mandrin de serrage expansible de l'outil de finition ;
la chambre de pression (404 ; 504 ; 604) présente une paroi intérieure se trouvant entre la chambre de pression (404 ; 504 ; 604) et un outil à serrer centralement et une paroi extérieure se trouvant entre la lame (S ; S1, S2) et la chambre de pression (404 ; 504 ; 604), lesquelles parois présentent respectivement une épaisseur plus faible par rapport aux parois environnantes restantes de la chambre de pression (404 ; 504 ; 604), sachant que lors de la mise sous pression du moyen de pression, la paroi intérieure de la chambre sous pression (404 ; 504 ; 604) peut être pressée contre un outil serré centralement, alors que la paroi extérieure de la chambre de pression (404 ; 504 ; 604) peut être déformée élastiquement pour le réglage de la position de la lame.

14. Dispositif de réglage selon la revendication 13, **caractérisé en ce qu'**une fixation (14 ; 16) de l'anneau porteur de lame (6 ; 506 ; 606) est prévue sur le corps de base (400 ; 500), en particulier à l'aide de métal de brasage reçu dans des rainures périphériques (14).

15. Dispositif de réglage selon la revendication 13 ou 14, **caractérisé en ce que** la chambre de pression (606) est complètement moulée dans l'anneau porteur de lame (606), sachant que la chambre de pression (606) peut être remplie par des canaux de raccordement (620) avec le moyen de transmission de pression.

16. Dispositif de réglage selon la revendication 13 ou 14, **caractérisé en ce que** la chambre de pression (6 ; 506) est limitée par un corps de base (1 ; 2) et un anneau porteur de lame (6 ; 7) monté dessus et une fente entre le corps de base et l'anneau porteur de lame (6 ; 506) emboîté est rendu étanche contre la fuite du moyen de transmission de pression (40, 30 ; 15).

17. Dispositif de réglage en particulier pour un outil de finition étagé selon l'une quelconque des revendications 13 à 16, **caractérisé en ce que** le corps de base de fixation d'outil (400 ; 500) présente un logement d'outil central supplémentaire (12) associé à un mandrin de serrage expansible (8, 18).

18. Dispositif de réglage selon la revendication 17, **caractérisé en ce que** la chambre de pression du dispositif de réglage sert en même temps de chambre de pression du mandrin de serrage expansible.

19. Dispositif de réglage selon la revendication 17, **caractérisé en ce que** le dispositif de réglage et le mandrin de serrage expansible possèdent des chambres de pression (17, 304 ; 18, 504) séparées qui présentent un couplage de pression (320, 321 ; 19).

20. Dispositif de réglage selon la revendication 17, **caractérisé en ce que** le dispositif de réglage et le mandrin de serrage expansible présentent des chambres de pression séparées (18, 404) qui peuvent être mises sous pression indépendamment l'une de l'autre.

21. Outil de finition, en particulier alésoir, **caractérisé par** un dispositif de réglage selon l'une quelconque des revendications précédentes.

22. Dispositif de réglage selon la revendication 1 ou l'une quelconque des revendications 4 à 21, **caractérisé en ce que** la longueur (LD) des chambres de pression (DK ; DK1, DK2) correspond sensiblement à la longueur (LS) de la lame (S) dans le sens orthogonal au sens de réglage (R ; R1, R2).
